# EUROPÄISCHE PATENTSCHRIFT

(11) **EP 4 309 490 B1**
(45) Veröffentlichungstag und Bekanntmachung des Hinweises auf die Patenterteilung: **19.08.2026**
(21) Anmeldenummer: 23178354.9
(22) Anmeldetag: 09.06.2023
(51) Int. Cl.: A01F 12/44

(54) **REINIGUNGSZUSAMMENBAU FÜR EINEN MÄHDRESCHER**
CLEANING ASSEMBLY FOR A COMBINE HARVESTER
ENSEMBLE DE NETTOYAGE POUR MOISSONNEUSE-BATTEUSE

(30) Priorität: 22.07.2022 DE 102022118393
(43) Veröffentlichungstag der Anmeldung: 24.01.2024
(73) Patentinhaber: Deere & Company, Moline, IL 61265 (US)
(72) Erfinder: JUNG, Daniel, 68163 Mannheim (DE); RITTERSHOFER, Martin, 68163 Mannheim (DE); HURLEY, Kevin P., 68163 Mannheim (DE); CHANDE, Yogesh, 68163 Mannheim (DE); TUPPER, Michael, 68163 Mannheim (DE)
(74) Vertreter: Holst, Sönke

(56) Entgegenhaltungen:
- EP-A1- 1 769 669
- DE-A1- 102008 017 671
- DE-A1- 2 830 103
- US-A1- 2017 099 777

## Beschreibung

Die Erfindung betrifft einen Reinigungszusammenbau für einen Mähdrescher nach dem Oberbegriff des Anspruchs 1.

### Stand der Technik

Mähdrescher dienen zur Ernte von Korn. Die oberirdischen Teile von Pflanzen, wie Soja, Weizen oder Hafer, werden abgeschnitten oder aufgesammelt oder abgestreift oder die Fruchtstände der Pflanzen, wie Mais oder Sonnenblumen, werden abgetrennt und einer Dresch- und Trenneinrichtung zugeführt, um das Korn von den übrigen Bestandteilen des Ernteguts zu trennen. Nach dem Dresch- und Trennvorgang befinden sich noch Verunreinigungen im Korn, wie Strohteilchen und Spreu. Das beim Dreschen und Trennen gewonnene Gemisch aus Korn und Verunreinigungen wird daher über Fördereinrichtungen einer Reinigung zugeführt, die üblicherweise ein Obersieb und ein Untersieb und optional ein Vorsieb umfasst. Ein Gebläse beaufschlagt die Siebe von unten her mit einem Luftstrom. Die Siebe werden zudem in eine pendelnde Hin- und Herbewegung versetzt, bei der sie sich auf elliptischen oder kreisförmigen Bahnen nach vorn und hinten und nach oben und unten bewegen.

Da die Wirkung der Reinigung zumindest teilweise auf der Wirkung der Schwerkraft beruht und von der Materialstärke (Dicke) des Gemischs auf den Sieben abhängt, sodass ein brauchbares Ergebnis am besten erzielbar ist, wenn das Erntegut homogen über die Breite der Siebe verteilt ist, wurden (neben in seitlicher Richtung hin- und her schwingenden Sieben, die zur Vergleichmäßigung der Materialverteilung auf dem Sieb führen sollen) verschiedene Anordnungen vorgeschlagen, die dazu dienen, das Erntegut am Einlass der Reinigung möglichst gleichmäßig zu verteilen.

So beschreibt die GB 922 907 A einen vor dem Abgabeende des (das von der Dreschtrommel abgegebene Gemisch nach hinten zur Reinigung fördernden) Förderbodens angeordneten Schneckenförderer, um das Erntegut nötigenfalls, z.B. beim Befahren eines Seitenhangs, nach links oder rechts (hangaufwärts) zu fördern, um die Reinigung über ihre Breite möglichst homogen mit Erntegut zu beaufschlagen. Ähnliche Anordnungen mit Schneckenförderern am Abgabeende eines Förderbodens, der das Erntegut vom Separator nach vorn zur Reinigung fördert, finden sich in US 3 581 746 A, EP 2 425 702 A1 und EP 3 501 259 A1. Es wurden für diesen Zweck auch an der besagten Stelle angeordnete Förderbänder zur Querförderung des Ernteguts vorgeschlagen (DE 24 54 315 A1, EP 2 425 702 A1). Ein weiterer Ansatz (US 5 338 257 A) besteht darin, am vorderen Ende eines Siebs eine um zwei Ritzel mit horizontaler, sich in Vorwärtsrichtung erstreckenden Achsen umlaufende Kette anzuordnen, an der eine Anzahl an nach hinten, über den vorderen Bereich des Siebs ragenden Fingern befestigt sind. Je nach seitlicher Neigung des Mähdreschers wird die Kette nach links oder rechts in Bewegung gesetzt, wobei sich die Finger des oberen Trums hangaufwärts bewegen. Das Sieb wird von unten her mit Luft beaufschlagt. DE 10 2008 017671 A1 offenbart einen Reinigungszusammenbau für einen Mähdrescher.

### Aufgabe

Es ist nach alledem erkennbar, dass die bisherigen Querförderer außerhalb des vom Gebläse bereitgestellten Luftstroms angeordnet sind. Sie stellen eine gewisse Förderwirkung für das Gemisch in seitliche Richtung bereit, die allein auf der mechanischen Einwirkung beruht.

Die vorliegende Erfindung hat sich zum Ziel gesetzt, eine verbesserte Wirkung der Reinigung zu erzielen.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Reinigungszusammenbau für einen Mähdrescher umfasst einen Förderer zum Transport von gedroschenem und/oder separierten Gemisch aus Korn und Verunreinigungen von einer Dreschund/oder Trenneinrichtung zu einem Einlass des Reinigungszusammenbaus, Siebe zur Reinigung des dem Einlass des Reinigungszusammenbaus zugeführten Gemischs, die durch ein Gebläse mit einem Luftstrom beaufschlagbar sind, und einen am Einlass des Reinigungszusammenbaus angeordneten Querförderer zur Vergleichmäßigung der seitlichen Verteilung des zuführten Gemischs. Der Querförderer ist in offener, luftdurchlässiger Bauweise ausgeführt und in einem vom Gebläse bereitgestellten Luftstrom angeordnet.

Der luftdurchlässige Querförderer ist im vom Gebläse bereitgestellten Luftstrom angeordnet, was den Vorteil hat, dass einerseits auch rückwärtig des Querförderers angeordnete Einrichtungen, wie Lamellen und/oder Fingerrechen mit dem Luftstrom beaufschlagt werden können, um bereits im Bereich des Einlasses des Reinigungszusammenbaus eine luftstrombasierte Trennung des Gemischs in Korn und Verunreinigungen zu erzielen. Durch die offene Bauweise bewirkt der Querförderer andererseits auf mechanische Weise und durch den das an seiner Oberseite liegende Gemisch durchströmenden Luftstrom eine Auflockerung und Trennung des Gemischs. Durch die Zwischenräume des Querförderers hindurchtretendes Gemisch wird durch den Luftstrom weiter getrennt. Auf diese Weise wird die Wirkung des Reinigungszusammenbaus verbessert.

### Ausführungsbeispiel

In den Zeichnungen ist ein nachfolgend näher beschriebenes Ausführungsbeispiel der Erfindung dargestellt. Es zeigt:
- Fig. 1: eine schematische seitliche Ansicht eines Mähdreschers,
- Fig. 2: eine perspektivische Ansicht des Reinigungszusammenbaus des Mähdreschers der Figur 1 von links vorn und oben,
- Fig. 3: eine seitliche Ansicht des Reinigungszusammenbaus,
- Fig. 4: ein vergrößerter Ausschnitt aus Figur 2, und
- Fig. 5: eine perspektivische Ansicht des Querförderers.

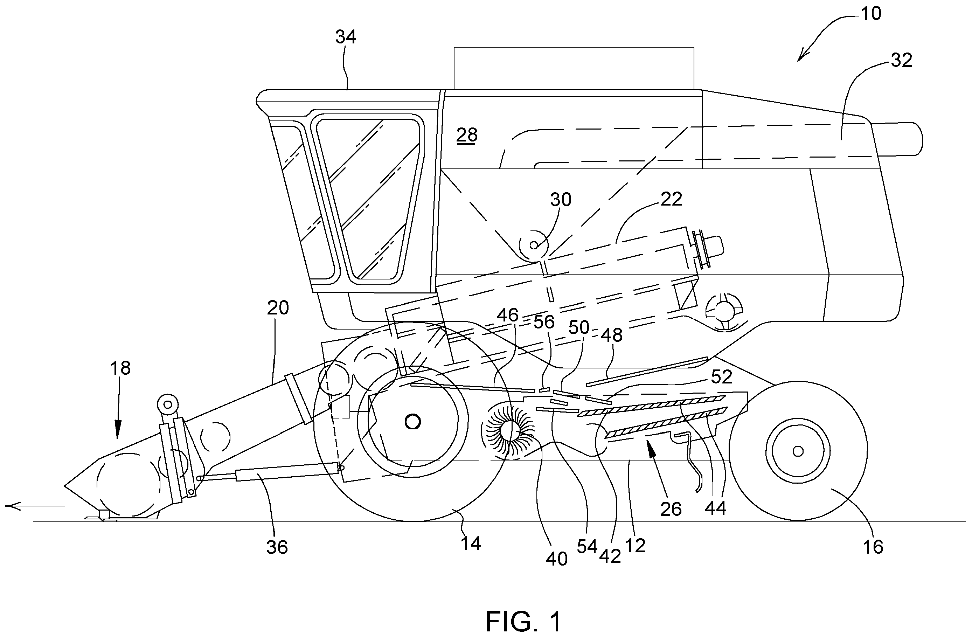

Die Figur 1 zeigt eine selbstfahrende Erntemaschine in Form eines Mähdreschers 10 mit einem Fahrgestell 12, das sich über angetriebene vordere Räder 14 und lenkbare rückwärtige Räder 16 auf dem Boden abstützt und von diesen fortbewegt wird. Die Räder 14, 16 werden mittels nicht gezeigter Antriebsmittel in Drehung versetzt, um den Mähdrescher 10 z. B. über ein abzuerntendes Feld zu bewegen. Im Folgenden beziehen sich Richtungsangaben, wie vorn und hinten, auf die Fahrtrichtung V des Mähdreschers 10 im Erntebetrieb, die in der Figur 1 nach links verläuft.

An den vorderen Endbereich des Mähdreschers 10 ist ein Erntevorsatz 18 in Form eines Schneidwerks abnehmbar angeschlossen, um beim Erntebetrieb Erntegut in Form von Getreide oder anderen dreschbaren Halmfrüchten von dem Feld zu ernten und es nach oben und hinten durch einen Schrägfördererzusammenbau 20 einem Axialdreschwerk 22 zuzuführen. Das im Axialdreschwerk 22 durch Dreschkörbe und Roste hindurchtretende, Körner und Verunreinigungen enthaltende Gemisch gelangt in einen Reinigungszusammenbau 26. Durch den Reinigungszusammenbau 26 gereinigtes Getreide wird mittels einer Körnerschnecke einem Körnerelevator zugeführt, der es in einen Korntank 28 befördert. Das gereinigte Getreide aus dem Korntank 28 kann durch ein Entladesystem mit einer Querschnecke 30 und einem Entladeförderer 32 entladen werden. Die genannten Systeme werden mittels eines Verbrennungsmotors angetrieben und von einem Bediener aus einer Fahrerkabine 34 heraus kontrolliert und gesteuert. Das Axialdreschwerk 22 ist nur ein Ausführungsbeispiel und könnte durch ein Tangentialdreschwerk mit nachfolgenden Trenneinrichtungen in Form von Separatortrommeln und/oder Strohschüttlern oder Axialtrennrotoren ersetzt werden.

Der Reinigungszusammenbau 26 umfasst in an sich bekannter Weise ein oberes Sieb 42 und ein unteres Sieb 44, die durch ein Gebläse 40 mit einem die Siebe 42, 44 nach hinten und oben durchströmenden Luftstrom beaufschlagt werden. Die Größe der Sieböffnungen und die Drehzahl des Gebläses 40 kann in an sich bekannter Art durch eine selbsttätige Reinigungseinstellung oder durch den Bediener aus der Fahrerkabine 34 verändert werden.

Das im vorderen Bereich des Axialdreschwerks 22 aus dem Erntegut herausgelöste (ausgedroschene) Gemisch aus Korn und Verunreinigungen wird durch einen vorderen Förderer 46 nach hinten gefördert, der somit zum Fördern des ausgedroschenen Gemischs dient. Ein rückwärtiger Förderer 48 fördert das im rückwärtigen Bereich des Axialdreschwerks 22 separierte (getrennte) Gemisch nach vorn.

Am abgabeseitigen Ende des vorderen Förderers 46 ist ein Förderboden 56 vorgesehen, auf den nach hinten ein Querförderer 50 folgt. Rückseitig des Querförderers 50 ist eine Anzahl an sich quer und schräg nach oben und hinten erstreckenden, hintereinander angeordneten Lamellen 52 vorgesehen. Unterhalb des Querförderers 50 befindet sich ein weiterer Förderboden 54.

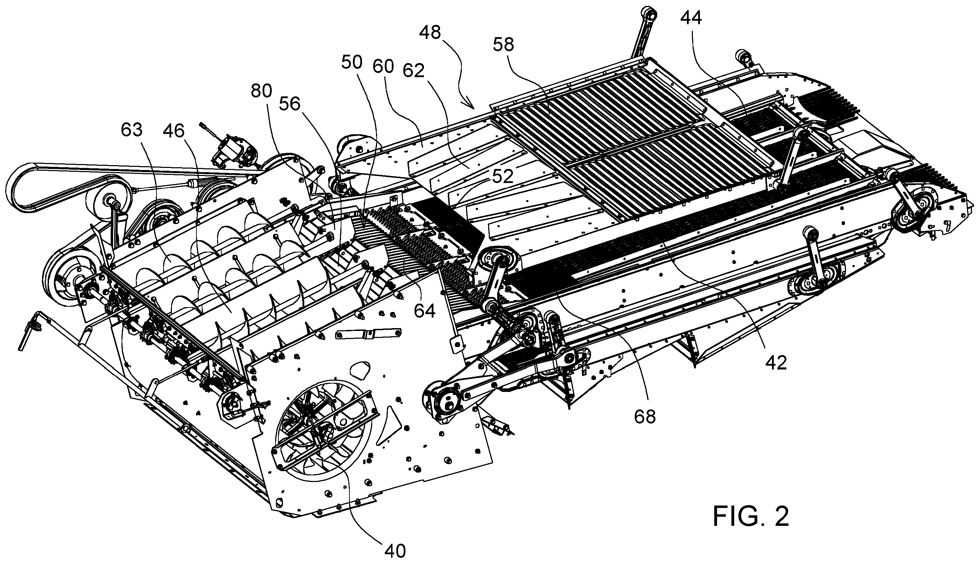

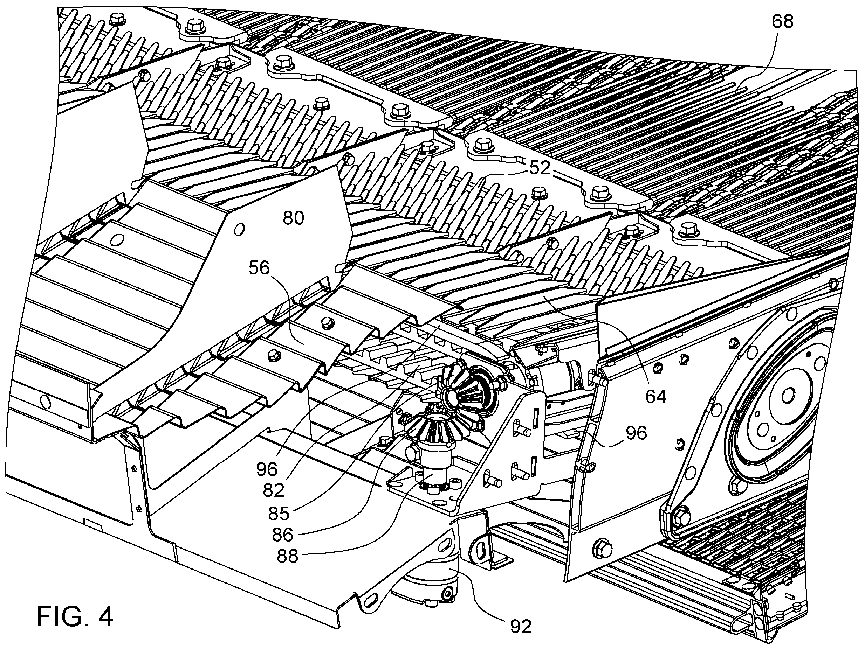

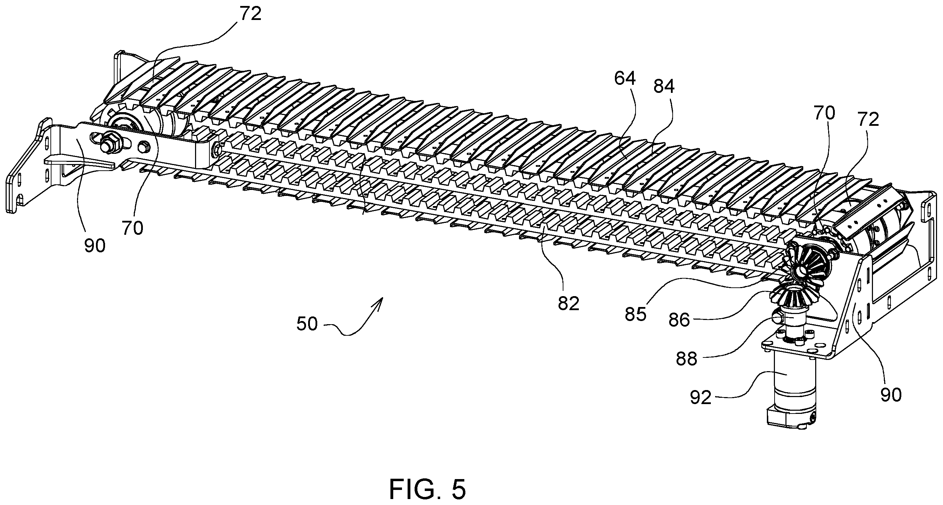

Es wird nun auf die Figuren 2 bis 5 verwiesen. Dort ist erkennbar, dass der vordere Förderer 46 eine Anzahl sich in Vorwärtsrichtung V erstreckender, seitlich nebeneinander angeordneter Förderschnecken 63 umfasst. Der unmittelbar stromab folgende Förderboden 56 ist unterhalb des rückwärtigen Endes des vorderen Förderers 46 angeordnet und mit seinem vorderen Ende demgegenüber nach vorn versetzt. Der Förderboden 56 ist mit sich quer erstreckenden Sägezahnprofilen ausgestattet. An der Oberseite des Förderbodens 56 sind sich vertikal und in Vorwärtsrichtung V erstreckende Trennbleche 80 angeordnet, die in seitlicher Richtung jeweils mittig zwischen zwei Förderschnecken 63 des vorderen Förderers 46 positioniert sind. Sie sollen verhindern, dass sich das Gemisch seitlich auf dem Förderboden 56 bewegt, insbesondere beim Befahren eines Seitenhangs.

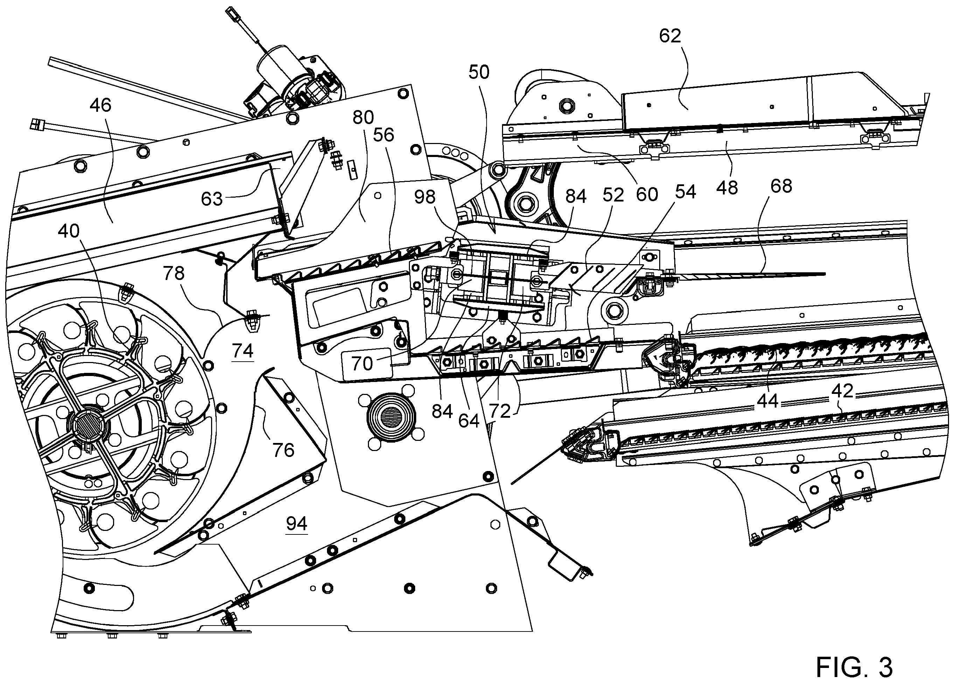

Der rückwärtige Förderer 48 umfasst einen rückwärtigen Bereich mit sich quer erstreckenden Sägezahnprofilen 58 und einen glatten vorderen Bereich 60 mit sich vertikal erstreckenden Leitblechen 62, die das separierte Gemisch seitlich zusammenführen. Dieses gelangt, wie in der Figur 3 erkennbar ist, auf den Querförderer 50. Wie in der Figur 2 gezeigt, ist der vordere Bereich 60 an seinem vorderen Ende mittig mit einem Ausschnitt versehen. Das separierte Gemisch wird demnach dem Querförderer 50 zum größten Teil in dessen Mitte aufgegeben. Der rückwärtige Förderer 48 wird im Betrieb in eine nach vorn und hinten sowie oben und unten oszillierende Bewegung versetzt, was analog für die Siebe 42, 44 gilt. Hierzu kann der rückwärtige Förderer 48 an Schwingen aufgehängt sein und über einen Exzenterantrieb in die besagte Bewegung versetzt werden. Je nach Stellung des rückwärtigen Förderers 48 und nach seitlicher Position der Gutabgabe gelangt das vom rückwärtigen Förderer abgegebene Erntegut auf den Querförderer 50 und/oder auf die Lamellen 52.

Der Förderboden 56, der Querförderer 50 und zu einem gewissen Teil auch die Lamellen 52 bilden demnach einen Einlass des Reinigungszusammenbaus 26.

Unterhalb des Querförderers 50 ist der weitere Förderboden 54 vorgesehen, der mit sich quer erstreckenden Sägezahlprofilen ausgestattet ist. Der Querförderer 50 bildet mit dem Förderboden 56, den Lamellen 52 und hinter den Lamellen 52 angebrachten, sich nach hinten erstreckenden Fingerrechen 68 einen Zusammenbau, der gemeinsam in eine oszillierende Bewegung versetzbar ist, d.h. sich kontinuierlich nach vorn und hinten und unten und oben bewegt, analog zum rückwärtigen Förderer 48.

Ein zwischen einer oberen Auslasswand 78 und einer unteren Auslasswand 76 definierter, oberer Auslass 74 des Gebläses 40 mündet unterhalb des Förderbodens 56. Ein unterer Auslass 94 des Gebläses 40 ist auf die Siebe 42, 44 gerichtet.

Der Querförderer 50 umfasst eine Anzahl von sich in Vorwärtsrichtung V erstreckenden Mitnehmern 64, die sich jeweils zwischen zwei endlosen, innen verzahnten Zugmitteln 84, die wie gezeigt als Riemen ausgeführt sind, jedoch auch als Ketten ausgeführt werden könnten, erstrecken. Die Mitnehmer 64 sind als U-förmige Profile ausgeführt, die mit ihrer Basis an den Zugmitteln 84 befestigt sind, z.B. verschraubt. An ihren vorderen und rückwärtigen Enden sind die Mitnehmer 64 abgeschrägt. Die beiden Zugmittel 84 laufen jeweils um zwei vordere Umlenkräder 70 bzw. zwei rückwärtige Umlenkräder 72 um. Die Umlenkräder 70, 72 sind ihrerseits drehbar an Halterungen 90 gelagert, die ihrerseits mit einem stützenden Gestell des oben erwähnten Zusammenbaus aus Querförderer 50, Förderboden 56 und Lamellen 52 befestigt sind. Die beiden Zugmittel 84 können durch geeignete Mittel (wie beispielsweise Federn und/oder verstellbare Anbringung an den Halterungen 90) gespannt werden.

Eine Antriebsanordnung mit einem Motor 92, einer damit gekoppelten Welle 88 und kämmenden Kegelzahnrädern 85, 86 dient dazu, die auf einer Seite angeordneten Umlenkräder 70, 72 anzutreiben, die ihrerseits wiederum form- und/oder kraftschlüssig die Zugmittel 84 in Bewegung versetzen. Der Motor 92 kann elektrisch oder hydraulisch angetrieben werden und über flexible, in einer Schlaufe geführte Leitungen mit einer am Fahrgestell 12 angebrachten Antriebsenergiequelle verbunden werden. Die zugehörigen fahrgestell-seitigen Leitungen können insbesondere in dem rückwärtig der Auslasswand 76 gebildeten Hohlraum geführt sein. Anstelle eines Motors 92 kann auch ein drehzahlund -richtungsveränderlicher (mechanischer) Antriebsstrang verwendet werden, der die Welle 88 mit dem Verbrennungsmotor verbindet.

Sich über die Breite des Querförderers 50 erstreckende Stützelemente 96, die unterseitig an den Mitnehmern 64 vor bzw. hinter den oberen Trums der Zugmittel 84 anliegen, dienen zum Abstützen der Zugmittel 84 und verhindern, dass diese durchhängen oder in eine vertikale Schwingbewegung gelangen. Ein weiteres Stützelement 96 befindet sich mittig unterhalb der Mitte der Mitnehmer 64 des unten Trums des Querförderers 50.

Basierend auf der sensorisch erfassten seitlichen Neigung des Mähdreschers 10 und/oder einer sensorisch erfassten Verteilung des Materials über die Breite des Reinigungszusammenbaus 26 und/oder einer Bedienereingabe über eine geeignete Schnittstelle wird im Erntebetrieb in an sich bekannter Weise selbsttätig die Drehrichtung und -geschwindigkeit des Motors 92 des Querförderers 50 festgelegt (vgl. US 3 581 746 A, US 5 338 257 A, EP 3 501 259 A1), um die Verteilung des Ernteguts am Einlass des Reinigungszusammenbaus 26 zu vergleichmäßigen. Das obere Trum des Querförderers 50 wird jeweils so angetrieben, dass es sich zur hangaufwärts gerichteten Seite oder zu jener Seite hin bewegt, wo weniger Gemisch vorhanden ist.

Nach alledem ergibt sich folgende Funktion des Reinigungszusammenbaus 26.

Das vom vorderen Förderer 46 an seinem rückwärtigen Abgabeende abgegebene, ausgedroschene Gemisch fällt über eine Fallstufe auf den Förderboden 56 und wird von diesem nach hinten gefördert, wo es auf das obere Trum des Querförderers 50 gelangt. Dorthin gelangt auch das vom rückwärtigen Förderer 48 nach vorn abgegebene, separierte Gemisch.

Der Querförderer 50 wird durch den Auslass 74 des Gebläses von vorn und unten her mit einem Luftstrom beaufschlagt, der zwischen der Unterseite des Förderbodens 56 und der Oberseite des weiteren Förderbodens 54 nach hinten strömt. Der Querförderer 50 ist wegen seiner offenen Bauform mit den an endlosen Zugmitteln 84 aufgehängten Mitnehmern 64, anders als ein Schneckenförderer oder ein Förderband, sowohl in horizontaler als auch in vertikaler Richtung (luft-) durchlässig. Dadurch kann einerseits der vom Auslass 74 einlaufende Luftstrom durch das auf dem oberen Trum liegende Gemisch hindurchströmen und leichtere Verunreinigungen nach hinten hinfort blasen, andererseits Korn aus dem oberhalb des oberen Trums des Querförderers 50 geförderten Gemisch zwischen den Mitnehmern 64 nach unten fallen.

Von der Oberseite des oberen Trums des Querförderers 50 gelangt das Gemisch durch die Schwingbewegung und den Luftstrom bedingt auf die dahinter folgenden Lamellen 52 und die Fingerrechen 68. Die Lamellen 52 werden ebenfalls von unten her mit dem Luftstrom aus dem Gebläse 40 durchströmt und auch dort findet eine gewisse Trennwirkung für das darauf liegende Gemisch statt, was analog auch für den Fingerrechen 68 gilt. Das Gemisch gelangt von den Fingerrechen 68 auf das obere Sieb 44.

Das Korn und andere Bestandteile des Gemischs, die durch den Querförderer 50 und zwischen den Lamellen 52 hindurch nach unten fallen, gelangen auf den weiteren Förderboden 54. Dieser transportiert sie nach hinten zu seinem rückwärtigen Abgabeende, an dem sie auf einer Fallstufe nach unten fallen und auf das untere Sieb 42 gelangen. Diese Fallstufe wird durch den unteren Auslass 94 des Gebläses 40 mit einem Luftstrom beaufschlagt, der leichtere Verunreinigungen nach hinten wegbläst.

Bei seitlich ungleichmäßiger Materialverteilung im Reinigungszusammenbau 26 wird der Querförderer 50 durch den Motor 92 in Betrieb gesetzt. Das obere Trum des Querförderers 50 bewegt das gedroschene bzw. separierte, einlaufende Gemisch zu jener Seite, an der weniger Material vorliegt. Dabei erfolgt, aufgrund der offenen Bauweise mit endlosen Zugmitteln 84 und Mitnehmern 64, nach und nach eine Materialabgabe über die gesamte Breite des Querförderers 50. Die Geschwindigkeit, mit welcher der Motor 92 ggf. arbeitet, kann fest vorgegeben sein, oder sie ist variabel.

Die Inbetriebnahme, Drehrichtung und Geschwindigkeit des Motors 92 kann mittels einer entsprechenden Bedienereingabe über eine geeignete Schnittstelle in der Kabine 30 erfolgen. Zusätzlich oder alternativ dazu wäre denkbar, sie durch eine elektronische Steuereinrichtung zu kontrollieren, basierend auf einer durch einen Sensor gemessenen Materialverteilung auf dem Sieb oder einer dafür repräsentativen Größe (d.h. basierend auf einer Rückkopplung für den aktuellen Wert der Materialverteilung, so genannte "closed loop"-Regelung) und/oder basierend auf gemessenen Größen, welche einen Rückschluss auf die aktuelle Materialverteilung ermöglichen (d.h. ohne Rückkopplung, so genannte "open loop"-Steuerung). Die Geschwindigkeit des Motors 92 wird um so größer sein, je größer die Ungleichmäßigkeit der gemessenen oder erwarteten Materialverteilung ist.

Für eine sensorische Erfassung der aktuellen Materialverteilung kann in an sich bekannter Weise die seitliche Verteilung des Materials auf dem Sieb gemessen werden (z.B. mittels einer Kamera oder eines Sensors, der den Luftstrom durch das Sieb erfasst) und/oder es wird die seitliche Verteilung der am rückwärtigen Ende des Siebs abgegebenen Verluste und/oder des in einen Überkehrförderer einlaufenden, dort zu einem Nachdrescher oder zur Drescheinrichtung geförderten, Materials und/oder der vom Sieb abgeschiedenen Körner erfasst (vgl. EP 3 210 458 A1 oder EP 3 482 624 A1).

Für eine sensorische Erfassung einer erwarteten Materialverteilung kann die seitliche Neigung des Mähdreschers 10 durch einen (nicht gezeigten) Sensor erfasst oder aus einer topografischen Karte entnommen werden. Da die zu erwartende Asymmetrie in der Materialverteilung umso größer ist, je steiler die Neigung ist und je größer der Durchsatz ist, wird die Geschwindigkeit des Motors 92 vorzugsweise von beiden Eingangswerten (Neigung und Durchsatz) abhängen, z.B. proportional zum Produkt daraus sein.

Das untere Trum des Querförderers 50 bewegt sich dabei in die Gegenrichtung, sodass prinzipiell die Gefahr besteht, dass es Material in die falsche Richtung fördert. Aus diesem Grunde ist die Höhe des unteren Trums oberhalb des weiteren Förderbodens 54 so gewählt, dass das auf dem weiteren Förderboden 54 befindliche Material sich im normalen Betrieb unterhalb des unteren Trums des Querförderers 50 befindet. Von oben auf die Mitnehmer 64 des unteren Trums fallendes Material wird aufgrund der glatten Flächen der Mitnehmer 64 auf ihren den endlosen Zugmitteln 84 benachbarten Seiten davon herabfallen und nicht oder zumindest nicht in störendem Maße in die falsche Richtung mitgenommen.

Um zu verhindern, dass Material durch das obere Trum hindurch auf das untere Trum fällt und in die ungewünschte Richtung gefördert wird, könnte man in der Mittelebene des Querförderers 50 ein flächiges Trennelement 98 einziehen, wie es in der Figur 3 schematisch gezeigt ist.

Die offene Bauweise des Querförderers 50 mit endlosen Zugmitteln 84 sorgt im Ergebnis dafür, dass der Luftstrom des Gebläses 40 horizontal durch den Querförderer 50 hindurch zu den Lamellen 52 und den Fingerrechen 68 gelangen kann. Zudem ermöglicht der Querförderer 50 eine gewisse Trennung von Korn und Verunreinigungen und eine sukzessive Abgabe des geförderten Materials über die Breite der Reinigungseinrichtung 26.

## Patentansprüche

1. Reinigungszusammenbau (26) für einen Mähdrescher (10), umfassend:
einen Förderer (46, 48) zum Transport von gedroschenem und/oder separierten Gemisch aus Korn und Verunreinigungen von einer Dresch- und/oder Trenneinrichtung (22) zu einem Einlass des Reinigungszusammenbaus (26),
Siebe (42, 44) zur Reinigung des dem Einlass des Reinigungszusammenbaus (26) zugeführten Gemischs, die durch ein Gebläse (40) mit einem Luftstrom beaufschlagbar sind, und
einen am Einlass des Reinigungszusammenbaus (26) angeordneten Querförderer (50) zur Vergleichmäßigung der seitlichen Verteilung des zuführten Gemischs,
**dadurch gekennzeichnet, dass** der Querförderer (50) in offener, luftdurchlässiger Bauweise ausgeführt und in einem vom Gebläse (40) bereitgestellten Luftstrom angeordnet ist.

2. Reinigungszusammenbau (26) nach Anspruch 1, wobei der Querförderer (50) ein endloses Zugmittel (84) mit entlang der Länge des Zugmittels (84) beabstandet verteilten Mitnehmern (64) umfasst, wobei das Zugmittel (84) um Umlenkräder (70, 72) umläuft.

3. Reinigungszusammenbau (26) nach Anspruch 2, wobei der Querförderer (50) zwei hintereinander angeordnete Zugmittel (84) umfasst und die Mitnehmer (64) jeweils mit beiden Zugmitteln (84) verbunden sind.

4. Reinigungszusammenbau (26) nach Anspruch 2 oder 3, wobei die Mitnehmer (64) ein U-förmiges Profil aufweisen, das nach oben hin geöffnet ist, wenn sich der jeweilige Mitnehmer (64) am oberen Trum des Querförderers (50) befindet.

5. Reinigungszusammenbau (26) nach einem der Ansprüche 2 bis 4, wobei die Mitnehmer (64) des unteren und/oder oberen Trums des Querförderers (50) sich auf Stützelementen (96) abstützen, welche sich in seitlicher Richtung erstrecken.

6. Reinigungszusammenbau (26) nach einem der vorhergehenden Ansprüche, wobei der Luftstrom den Querförderer (50) im Wesentlichen horizontal an- und durchströmt.

7. Reinigungszusammenbau (26) nach Anspruch 6, wobei rückwärtig des Querförderers (50) eine Anzahl an Lamellen (52) angeordnet ist, die vom Luftstrom durchströmbar sind, der zuvor durch den Querförderer (50) geströmt ist.

8. Reinigungszusammenbau (26) nach Anspruch 7, wobei rückwärtig der Lamellen (52) ein Fingerrechen (68) angeordnet ist, der vom Luftstrom durchströmbar sind, der zuvor durch den Querförderer (50) geströmt ist.

9. Reinigungszusammenbau (26) nach einem der vorhergehenden Ansprüche, wobei dem Querförderer (50) ein Förderboden (56) vorgelagert ist, auf welchen ein Förderer (46) Gemisch aus der Drescheinrichtung über eine Fallstufe abgibt.

10. Reinigungszusammenbau (26) nach einem Ansprüche 7 bis 9, wobei unterhalb des Querförderers (50) und der Lamellen (52) ein weiterer Förderer (54) angeordnet ist, der das darauf fallende Material nach hinten fördert und über eine Fallstufe an den vorderen Bereich eines unteren Siebs (42) abgibt.

11. Reinigungszusammenbau (26) nach Anspruch 10, wobei das untere Trum des Querförderers (50) in einer derart bemessenen Höhe über dem weiteren Förderer (54) angeordnet ist, dass das untere Trum nicht in nennenswerte Maße auf dem weiteren Förderer (54) befindliches Material zur Seite fördert.

12. Reinigungszusammenbau (26) nach einem der vorhergehenden Ansprüche, wobei der Querförderer (50) in eine Schwingbewegung versetzbar ist, insbesondere gemeinsam mit den Lamellen (52) und/oder dem Fingerrechen (68) und/oder dem Förderboden (56) und/oder dem weiteren Förderboden (54).

13. Reinigungszusammenbau (26) nach einem der vorhergehenden Ansprüche, wobei in der Mittelebene des Querförderers (50) ein flächiges Trennelement (98) angebracht ist, um zu verhindern, dass Material durch das obere Trum des Querförderers (50) hindurch auf das untere Trum fällt und in die ungewünschte Richtung gefördert wird.

14. Reinigungszusammenbau (26) nach einem der vorhergehenden Ansprüche, wobei die Drehrichtung und -geschwindigkeit eines Antriebs, insbesondere eines Motors (92), des Querförderers (50) basierend auf einer sensorisch erfassten und/oder aus einer topografischen Karte entnommenen seitlichen Neigung des Mähdreschers (10) und/oder einer direkt oder indirekt sensorisch erfassten Verteilung des Materials über die Breite des Reinigungszusammenbaus (26) und/oder einer Bedienereingabe über eine geeignete Schnittstelle vorgebbar ist.

15. Mähdrescher (10) mit einem Reinigungszusammenbau (26) nach einem der vorhergehenden Ansprüche.

## Claims

1. Cleaning assembly (26) for a combine harvester (10), comprising:
a conveyor (46, 48) for transporting a threshed and/or separated mixture of grain and contaminants from a threshing and/or separating device (22) to an inlet of the cleaning assembly (26),
screens (42, 44) for cleaning the mixture fed to the inlet of the cleaning assembly (26), which are able to be subjected to the action of an air flow by a fan (40), and
a cross conveyor (50), arranged at the inlet of the cleaning assembly (26), for evening out the lateral distribution of the fed mixture,
**characterized in that** the cross conveyor (50) is embodied with an open, air-permeable design and is arranged in an air flow provided by the fan (40).

2. Cleaning assembly (26) according to Claim 1, wherein the cross conveyor (50) comprises an endless traction means (84) having drivers (64) distributed in a spacedapart manner along the length of the traction means (84), wherein the traction means (84) circulates about deflection wheels (70, 72).

3. Cleaning assembly (26) according to Claim 2, wherein the cross conveyor (50) comprises two traction means (84) arranged one behind the other and the drivers (64) are each connected to both traction means (84).

4. Cleaning assembly (26) according to Claim 2 or 3, wherein the drivers (64) have a U-shaped profile which is upwardly open when the respective driver (64) is located on the upper strand of the cross conveyor (50).

5. Cleaning assembly (26) according to one of Claims 2 to 4, wherein the drivers (64) of the lower and/or upper strand of the cross conveyor (50) are supported on support elements (96) which extend in a lateral direction.

6. Cleaning assembly (26) according to one of the preceding claims, wherein the air flow flows against and through the cross conveyor (50) substantially horizontally.

7. Cleaning assembly (26) according to Claim 6, wherein a number of slats (52) are arranged to the rear of the cross conveyor (50), which are able to be flowed through by the air flow that has previously flowed through the cross conveyor (50).

8. Cleaning assembly (26) according to Claim 7, wherein a finger rake (68) is arranged to the rear of the slats (52), which is able to be flowed through by the air flow that has previously flowed through the cross conveyor (50).

9. Cleaning assembly (26) according to one of the preceding claims, wherein a conveyor floor (56) is mounted upstream of the cross conveyor (50), onto which conveyor floor a conveyor (46) dispenses a mixture from the threshing device via a drop step.

10. Cleaning assembly (26) according to one of Claims 7 to 9, wherein a further conveyor (54) is arranged beneath the cross conveyor (50) and the slats (52), said further conveyor conveying the material dropping onto it towards the rear and dispensing it onto the front region of a lower screen (42) via a drop step.

11. Cleaning assembly (26) according to Claim 10, wherein the lower strand of the cross conveyor (50) is arranged at a height above the further conveyor (54) that is measured such that the lower strand does not appreciably convey material located on the further conveyor (54) to the side.

12. Cleaning assembly (26) according to one of the preceding claims, wherein the cross conveyor (50) is able to be set into a vibrating motion, in particular together with the slats (52) and/or the finger rake (68) and/or the conveyor floor (56) and/or the further conveyor floor (54).

13. Cleaning assembly (26) according to one of the preceding claims, wherein a planar separating element (98) is fitted in the central plane of the cross conveyor (50) in order to prevent material dropping through the upper strand of the cross conveyor (50) onto the lower strand and being conveyed in the undesired direction.

14. Cleaning assembly (26) according to one of the preceding claims, wherein the direction and speed of rotation of a drive, in particular of a motor (92), of the cross conveyor (50) are able to be predefined on the basis of a lateral inclination, sensed by a sensor and/or taken from a topographical map, of the combine harvester (10) and/or a distribution, sensed directly or indirectly by a sensor, of the material across the width of the cleaning assembly (26) and/or an operator input via a suitable interface.

15. Combine harvester (10) having a cleaning assembly (26) according to one of the preceding claims.

## Revendications

1. Ensemble de nettoyage (26) pour une moissonneuse-batteuse (10), comprenant :
un convoyeur (46,48) destiné à transporter le mélange battu et/ou séparé de grains et d'impuretés depuis un dispositif de battage et/ou de séparation (22) vers une entrée de l'ensemble de nettoyage (26),
des tamis (42, 44) destinés à nettoyer le mélange amené à l'entrée de l'ensemble de nettoyage (26), qui peut être soumis à l'action d'un flux d'air par une soufflante (40), et
un convoyeur transversal (50) disposé sur l'entrée de l'ensemble de nettoyage (26) destiné à égaliser la distribution latérale du mélange amené,
**caractérisé en ce que** le convoyeur transversal (50) présente une configuration ouverte perméable à l'air et est disposé dans un flux d'air fourni par la soufflante (40).

2. Ensemble de nettoyage (26) selon la revendication 1, le convoyeur transversal (50) comprenant un moyen de traction sans fin (84) avec des entraîneurs (64) répartis de manière espacée le long de la longueur du moyen de traction (84), le moyen de traction (84) tournant autour de roues de déviation (70, 72).

3. Ensemble de nettoyage (26) selon la revendication 2, le convoyeur transversal (50) comprenant deux moyens de traction (84) disposés l'un derrière l'autre et les entraîneurs (64) étant reliés respectivement aux deux moyens de traction (84).

4. Ensemble de nettoyage (26) selon la revendication 2 ou 3, les entraîneurs (64) comportant un profil en forme de U, qui est ouvert vers le haut, lorsque l'entraîneur (64) respectif se trouve sur le brin supérieur du convoyeur transversal (50).

5. Ensemble de nettoyage (26) selon l'une des revendications 2 à 4, les entraîneurs (64) du brin inférieur et/ou du brin supérieur du convoyeur transversal (50) prenant appui sur des éléments de support (96) qui s'étendent dans la direction latérale.

6. Ensemble de nettoyage (26) selon l'une des revendications précédentes, le flux d'air affluant sur et traversant sensiblement horizontalement le convoyeur transversal (50).

7. Ensemble de nettoyage (26) selon la revendication 6, un certain nombre de lamelles (52) qui peuvent être traversées par le flux d'air s'étant écoulé préalablement à travers le convoyeur transversal (50) étant disposé à l'arrière du convoyeur transversal (50).

8. Ensemble de nettoyage (26) selon la revendication 7, un râteau à doigts (68), qui peut être traversé par le flux d'air s'étant écoulé préalablement à travers le convoyeur transversal (50) étant disposé à l'arrière des lamelles (52).

9. Ensemble de nettoyage (26) selon l'une des revendications précédentes, un plancher de convoyage (56), sur lequel un convoyeur (46) distribue du mélange provenant du dispositif de battage par un étage de chute étant monté en amont du convoyeur transversal (50).

10. Ensemble de nettoyage (26) selon l'une des revendications 7 à 9, un convoyeur supplémentaire (54), qui transporte vers l'arrière la matière tombant sur lui et le distribue par un étage de chute à la zone avant d'un tamis inférieur (42), étant disposé en dessous du convoyeur transversal (50) et des lamelles (52).

11. Ensemble de nettoyage (26) selon la revendication 10, le brin inférieur du convoyeur transversal (50) étant disposé à une hauteur dimensionnée au-dessus du convoyeur supplémentaire (54) de telle manière que le brin inférieur ne transporte pas de matière se trouvant sur le convoyeur supplémentaire (54) dans une proportion non négligeable vers le côté.

12. Ensemble de nettoyage (26) selon l'une des revendications précédentes, le convoyeur transversal (50) pouvant être amené dans un mouvement oscillant, en particulier conjointement avec les lamelles (52) et/ou le râteau à doigts (68) et/ou le plancher de convoyage (56) et/ou le plancher de convoyage supplémentaire (54).

13. Ensemble de nettoyage (26) selon l'une des revendications précédentes, un élément de séparation plat (98) étant installé dans le plan central du convoyeur transversal (50) pour empêcher la matière de tomber à travers le brin supérieur du convoyeur transversal (50) sur le brin inférieur et d'être convoyée dans la direction non souhaitée.

14. Ensemble de nettoyage (26) selon l'une des revendications précédentes, la direction et la vitesse de rotation d'un entraînement, en particulier d'un moteur (92), du convoyeur transversal (50) pouvant être spécifiées sur la base d'une inclinaison latérale de la moissonneuse-batteuse (10) détectée par un capteur et/ou prélevée d'une carte topographique et/ou d'une répartition détectée directement ou indirectement par un capteur de la matière sur la largeur de l'ensemble de nettoyage (26) et/ou d'une entrée d'opérateur par une interface appropriée.

15. Moissonneuse-batteuse (10) avec un ensemble de nettoyage (26) selon l'une des revendications précédentes.
